Europäisches Patentamt

European Patent Office

Office européen des brevets

(11) Publication number: **0 097 028**
A2

# EUROPEAN PATENT APPLICATION

(21) Application number: **83303330.1**

(22) Date of filing: **09.06.83**

(51) Int. Cl.³: **G 06 F 3/04,** G 06 F 15/16

(30) Priority: **10.06.82 JP 98465/82**

(43) Date of publication of application: **28.12.83**
**Bulletin 83/52**

(84) Designated Contracting States: **DE FR GB**

(71) Applicant: **FUJI XEROX CO., LTD., No. 3-5,
Akasaka 3-chome, Minato-ku Tokyo 107 (JP)**

(72) Inventor: **Kobayashi, Junichi c/o Fuji Xerox Co. Ltd.,
Ebina Works No 2274 Hongo, Ebina-shi Kanagawa (JP)**
Inventor: **Nishimoto, Masato c/o Fuji Xerox Co. Ltd.,
Ebina Works No 2274 Hongo, Ebina-shi Kanagawa (JP)**

(74) Representative: **Prutton, Roger et al, Marks & Clerk
Alpha Tower Suffolk Street Queensway, Birmingham
B1 1TT (GB)**

(54) **Multiple-microcomputer communications system.**

(57) A multiple-microcomputer system in which communication of data between or among various microcomputer subsystems (11) is carried out over a common bus (12) with data temporarily stored in a posting file (19) also coupled to the common bus. Each microcomputer subsystem (11) is provided with a register file (16) where data to be communicated with other ones of the microcomputer subsystems or data received from other ones of the microcomputer subsystems or data received from other ones of the microcomputer subsystems is temporarily stored. Data can be transferred to or from the register files (16) via the common bus (12) by first transferring data into the posting file (19), examining the content of the data stored in the posting file (19), and then transferring the data so stored to the destination microcomputer subsystem.

# MULTIPLE-MICROCOMPUTER COMMUNICATIONS SYSTEM

## BACKGROUND OF THE INVENTION

The present invention relates to a system for communicating between microcomputers in a multiple-microcomputer system. In an electronic apparatus in which microcomputers are employed to perform various control functions, in some cases, a plurality of microcomputer subsystems are employed, each of which performs specific ones of the control functions. For example, in a facsimile system which must be capable of communicating with facsimile systems of different operating group types (GII, GIII, etc. as defined by the CCIT, the International Telegraph and Telephone Consultative Committee), a separate microcomputer subsystem is allotted to each group, while a yet further microcomputer subsystem is provided for performing other control functions such as input/output control. In such an electronic apparatus employing a multiple-microcomputer arrangement, in many cases, each microcomputer subsystem is provided on a separate circuit board. The respective boards are basically independent of one another although, of course, it is necessary to exchange information between the microcomputer subsystems in order to cause the overall apparatus to perform the desired task.

There have previously been proposed two basic types of inter-microcomputer communications systems,

2 0097028

one a system in which each microcomputer subsystem must communicate to others through dedicated lines, and the other a system in which all microcomputer subsystems share a common bus and communicate with one another over the common bus using a time-division multiplexing technique. In the former arrangement, if the necessary number of data lines is large and the subsystems are numerous, the overall system becomes bulky and expensive. Further, if the lines are large in number, there is a disadvantage that the communications circuit configuration is complex. In the latter approach, the control needed for time division multiplexing and the management of the common buses is complicated, and a separate microcomputer must be provided for performing this function. Accordingly, there is an accompanying disadvantage that the cost of the hardware needed is high.

<u>SUMMARY OF THE INVENTION</u>

According to the present invention, a register file is provided in each microcomputer subsystem and information to be transmitted is written into this register file. The assembled data from any register file can then be transferred into a posting file provided commonly to the overall system. The receiving microcomputer subsystem reads out the information from the posting file. In this communications system, since only gathering and managing of information are

00977028

performed between the register files through the common bus, control is simplified.

BRIEF DESCRIPTION OF THE DRAWINGS

Fig. 1 is a block diagram of a primary portion of a multiple-microcomputer system;

Fig. 2 is a diagram showing the configuration of communication data to be transferred between or among microcomputer subsystems;

Fig. 3 is a block diagram showing primarily a control circuit used in one of the subsystems of Fig. 1; and

Fig. 4 is a timing chart used for explaining the operation of the control circuit depicted in Fig. 3.

DESCRIPTION OF THE PREFERRED EMBODIMENTS

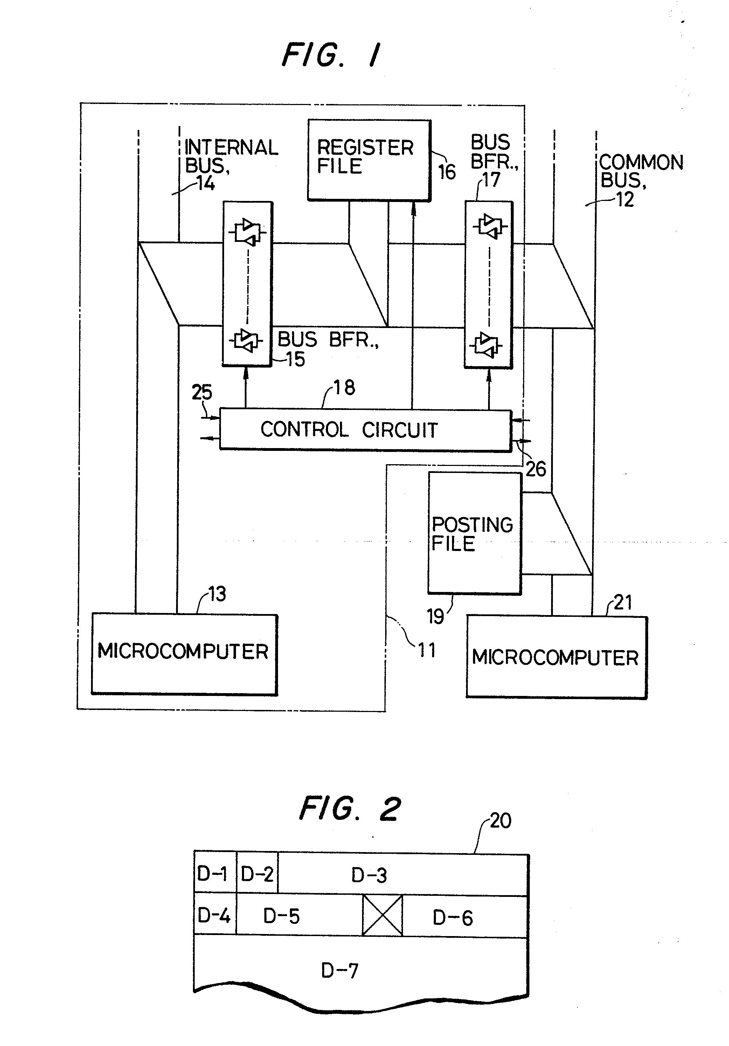

A preferred embodiment of a communications system of the invention will now be described. Fig. 1 is a block diagram illustrating a portion of a multiple-microcomputer system. In this drawing, the area encircled by a dot-dash line denotes a single microcomputer subsystem. Each of the other microcomputer subsystems (not shown) have the same configuration, and all are connected to a common bus 12. A microcomputer 13 is provided in each microcomputer subsystem for exclusive use for that subsystem. The microcomputer 13 is connected to various memories (not shown) and an interface circuit (not shown) through an internal bus 14. The internal bus 14 is also connected to a register file 16 through a first

　　　　　　0097028

bidirectional bus buffer 15. The register file 16 serves to temporarily store the contents of communications to be sent to or received from other microcomputer subsystems. To send a communication to another microcomputer subsystem, the content of the register file 16 is read out (in a manner to be described below) and sent to the common bus 12 through a second bidirectional bus buffer 17. A received communication is written into the register file 16 through the second bidirectional bus buffer 17. A control circuit 18 for controlling each bidirectional bus buffer is provided in each microcomputer subsystem. A posting file 19 for temporarily storing communications received from the various microcomputer subsystems and a microcomputer 21 for managing the common bus 12 are connected to the common bus 12. One of the plural microcomputers 13 may also perform the functions of the microcomputer 21.

With regard to the thus arranged multiple-microcomputer system, a description first will be given of a case where communication data is transferred from a microcomputer subsystem A to a microcomputer subsystem B. For the following discussion, the elements which constitute the microcomputer subsystem A (hereinafter referred to simply as subsystem A) are represented by the same reference numerals as those used in Fig. 1 but with a suffix A, and the elements which constitute the microcomputer subsystem B (hereinafter referred to simply as subsystem B) are similarly represented by the same reference numerals but with a suffix B. With reference to the diagram of Fig. 2, in the subsystem A, data to be communicated is arranged in a predetermined format. More specifically, communication data 20 is constituted by the the following data words:

(1)  Transmission Request, Word D-1 (one bit):

The single bit of this word represents the processing state of data transmission. The bit is "0" when data transmission is complete and "1" when permission to transmit is being requested.

(2)  Reception Information, Word D-2 (one bit):

The single bit of this word represents whether reception of data transmitted from another subsystem has been completed. Its bit state is defined as above, that is, "0" represents completion and "1" the contrary.

(3)  Transmit/Receive Designation, Word D-3 (six bits):

This word identifies the subsystem to which data is to be transmitted or the subsystem from which data is received. In the example presently under consideration, the subsystems B and A are assumed to be the receiving and transmitting subsystems, respectively.

(4)  Question/Answer, Word D-4 (one bit):

The single bit of this word designates whether the data to be transmitted represents a question or an answer. The signal is set to "1" when the data is a question and "0" when an answer.

(5) Communication Identification Numbers, Words D-5 and D-6 (three bits each):

Each communication is identified with a particular number. When, for instance, an answer is to be transmitted, the communication number of the communication which the answer is in response to is set in the word D-5 location and the communication number of the communication which is now being sent (the answer) is set in the location of word D-6.

(6) Communication Contents, Word D-7 (two or more bits):

The actual content of the received or transmitted communication is set in this word location.

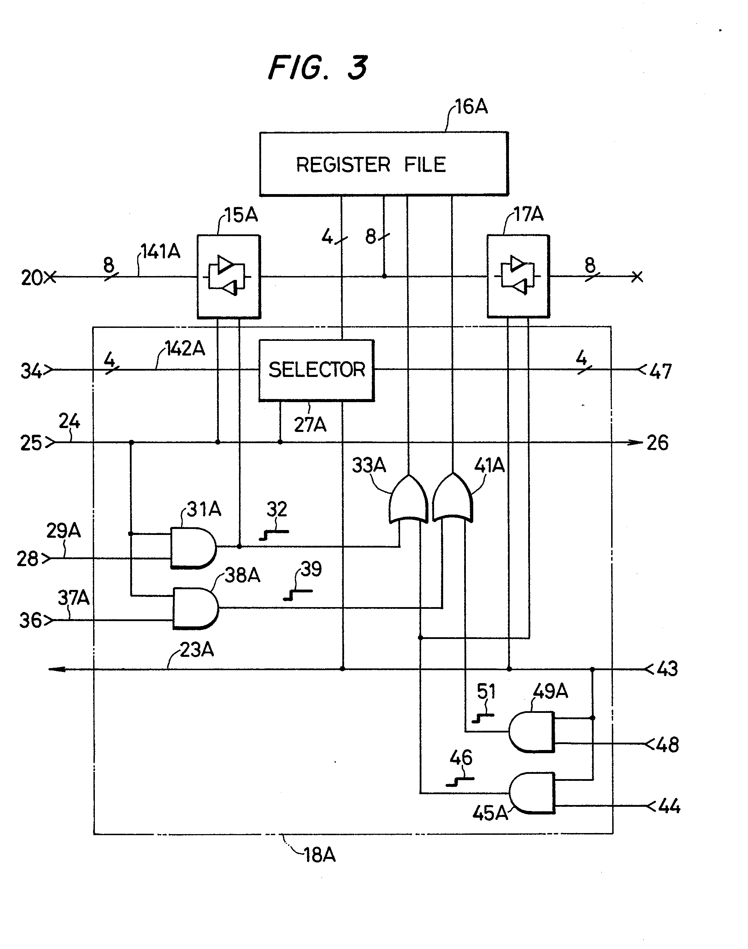

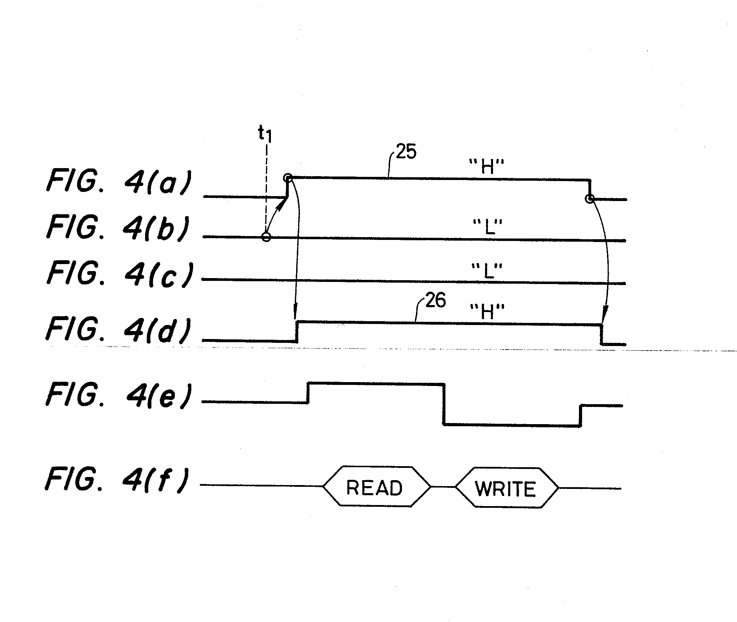

When a communication 20A to be transmitted has been assembled, the microcomputer 13A initiates the transmission of the assembled data. This operation will be explained with reference to Fig. 3, which shows primarily the control circuit of the subsystem A, and Fig. 4, which is a timing chart which will be used to explain the operation of the circuitry of Fig. 3.

First, the microcomputer 13A checks to see whether a use-inhibit interrupt signal on a line 23A is present in its active "1" (high logic level) state. Assuming that the state of this signal is "0" (low logic level) as shown in Fig. 4B, that is, assuming that the register file 16A is not being accessed from the common bus 12 (Fig. 4C), the microcomputer 13A produces a use-permission request signal in the "1" state on a use-permission request line 24A, thereby indicating on the common bus 12 that the microcomputer 13A wishes to transmit a communication. In response to the presence of the signal in the "1" state on the line 24A, a use-inhibit interrupt signal 26 (Fig. 4D) is communicated to the microcomputer 21 on a line 25. Thereafter, access by the microcomputer 21 to the register file 16A is inhibited.

During the presence of the use-inhibit interrupt signal on the line 26 in the "1" state, both the first bidirectional bus buffer 15A and a selector 27A are activated. The read request signal on the read line 29 is then set to the "1" state. With the signals on lines 24 and 29A both then being in the "1" state, an AND gate 31A outputs a "1". A read signal is thereby produced. In response thereto, the first bidirectional bus buffer 15A is set into a state where it transfers data from the register file 16A to a data bus 141A, the latter forming a portion of the internal bus structure of the microcomputer subsystem A. The register file 16A is supplied with the read signal through an OR gate 33A, and in response thereto, enables read out of the communication data which has previously been stored therein.

8       0097028

Thus, by successively supplying address information 34 to the register file 16A through an address bus 142A (which also forms a portion of the internal bus structure of the microcomputer subsystem A), reading out of the communication data from the register file 16A is performed (Fig. 4F).

It should also be mentioned that it is of course necessary before performing this reading operation to first determine whether communication data which had earlier been stored in the register file of the microcomputer subsystem which was intended for transmission to another system has already been transmitted. The reason for this is that the register file has the capacity to store only one complete communication as it is configured in the manner shown in Fig. 2. Assuming that the reading operation has been successfully performed, the data which has been received in the register file 16A can now be moved to other internal memories within the microprocessor subsystem for appropriate processing.

When the register file 16A has been cleared of all received incoming data, a communication data transmission operation can be executed. To do this, a write request signal in the "1" state is outputted onto the write line 37A. At that time, a write signal 39 is produced by an AND gate 38A by ANDing the write request signal 36 and the use-permission request signal 25. The first bus buffer 15A is then set to transfer data from the data bus 141A to the register file 16A (Fig. 4E). The register file 16A, upon receipt of the write signal 39 through the OR gate 41A, is set into a state where it can perform only a data writing operation. By then successively supplying address information 34 to the register file 16A through the address bus 142A, the communication data 20A which is to be transmitted to another microcomputer subsystem is written into the file register 16A (Fig. 4F). When this writing operation has been completed, the use-permission request signal 25 is set to the "0" state (Fig. 4A), and hence the use-inhibit interrupt signal 26 is deactivated (Fig. 4D).

When the use-inhibit interrupt signal 26 is deactivated, the microcomputer 21 outputs a use-permission request signal in the "1" state on the use-inhibit line 23A. Also at this time, a read request signal 44 is supplied. An AND gate 45A accordingly produces a read signal 46 in the "1" state, which is supplied to the file register 16A through the selector 27A. The second bidirectional bus buffer 17A, supplied with the use-permission signal 43 and the read signal 46, is set so that data can be transferred from the register 16A to the common bus 12. Accordingly, the communication data is read out of the register 16A and written into the posting file 19 via the common bus 12.

After the writing operation has been completed, the microcomputer 21 resets the read request signal 44 to the "1" state. In response thereto, a write signal 51 in the "1" state is produced by an AND gate 49A, which is supplied with the use-permission request signal 43 and the write request signal 48. The write signal 51 is supplied to the file register 16A through an OR gate 41A. Since the read signal 46 is then in the "0" state, the second bidirectional buffer 17A is set to transfer data from the common bus 12 to the register file 16A. At that time, the microcomputer 21 resets the send request word D-1 content in the communication data from the "1" to the "0" state. Completion of the transmission of the communication data is thereby indicated. After that time, the subsystem A can write into the file register 16A another set of communication data for communication to another subsystem, or it can be set to receive communication data from another subsystem. When the reading and writing operations in and out of the file register 16A have been completed by the microcomputer, the use request signal is deactivated (set to the "0" state).

The communication data is thus stored in the posting file 19. Responding to the data so stored, the microcomputer 21 fetches the data stored in the transmit/receive word D-3 and from that data determines the destination subsystem, here, subsystem B.

11 0097028

It then transmits the use-permission request signal to the subsystem B. At this time, if the register file 16B is being accessed internally, that is, within the subsystem B itself, a use-inhibit interrupt signal is issued. In response to the receipt of the use-permission request signal 43, the read request signal 44 is sent to the subsystem B in the same manner described above, whereupon the content of the register file 16B is read out. If there is then present communication data having its transmission request word bit in the "1" state, the data 20B is received into the posting file 19. After this transfer has taken place, a write request signal 48 is transmitted to the subsystem B, whereupon the communication data is transferred to the register file of the subsystem B.

The communication data is transferred to the register files of the designated systems using the above-described reading operation. Upon the completion of the transfer of the communication data, the reception information word D-2 of the communication data stored in the register file 16 is changed from "1" to "0". This informs the microcomputer 21 that the receiving operation has been completed, thereby placing it in a state in which the next reading operation can be performed.

As described above, in accordance with the invention, communication data to be transferred between or

0097028

among subsystems is relayed, via a common bus and a register file which forms a part of each subsystem connected to the common bus, through a posting memory. It thereby becomes possible to perform data transfers among the various subsystems efficaciously and with a minimum of hardware.

CLAIMS

1.    A multiple-microcomputer system comprising:

a plurality of microcomputer subsystems, each of said microcomputer subsystems comprising a register ·file for storing communication data to be transmitted to or received from other ones of said microcomputer subsystems;

a common bus linking all of said microcomputer subsystems; and

a posting file coupled to said common bus for temporarily storing communication data being transmitted from a register file of one of said microcomputer subsystems to a register file of another of said microcomputer subsystems.

2.    The multiple-microcomputer system of claim 1, further comprising a further microcomputer for controlling data transfers on said common bus.

3.    The multiple-microcomputer system of claim 1, wherein each of said microcomputer subsystems further comprises an internal bus; a first bus buffer coupling said register file to said internal bus; and a second bus buffer coupling said register file to said common bus.

4.    The multiple-microcomputer system of claim 3, further comprising means for controlling said first and second bus buffers.

5. The multiple-microcomputer system of claim 4, wherein said means for controlling said first and second bus buffers comprises means for determining whether said register file is in use, and means for permitting transfer of data in or out of said register file only in the case that said register file is not in use.

0097028

## FIG. 1

REGISTER FILE

INTERNAL BUS, 14

BUS BFR., 17

COMMON BUS, 12

16

BUS BFR., 15

25

18

CONTROL CIRCUIT

26

POSTING FILE

19

11

13

MICROCOMPUTER

21

MICROCOMPUTER

## FIG. 2

20

| D-1 | D-2 | D-3 | | |
|-----|-----|-----|-----|-----|
| D-4 | D-5 | | ☒ | D-6 |
| D-7 | | | | |

FIG. 3

FIG. 4(a)

FIG. 4(b)

FIG. 4(c)

FIG. 4(d)

FIG. 4(e)

FIG. 4(f)

$t_1$

25   "H"

"L"

"L"

26   "H"

READ   WRITE